# EUROPÄISCHE PATENTANMELDUNG

(11) **EP 4 656 028 A1**
(43) Veröffentlichungstag der Anmeldung: **03.12.2025**
(21) Anmeldenummer: 25178757.8
(22) Anmeldetag: 26.05.2025
(51) Int. Cl.: A01D 41/14, A01D 43/08

(54) **VORSATZGERÄT FÜR EINE LANDWIRTSCHAFTLICHE ERNTEMASCHINE UND LANDWIRTSCHAFTLICHE ERNTEMASCHINE**

(30) Priorität: 28.05.2024 DE 102024114966
(71) Anmelder: CLAAS Saulgau GmbH, 88348 Bad Saulgau (DE)
(72) Erfinder: König, Christian, 88094 Oberteuringen (DE); Blender, Sebastian, 88634 Herdwangen-Schönach (DE)

(57) **Zusammenfassung**

Vorsatzgerät (10) für eine landwirtschaftliche Erntemaschine, mit einem Hauptrahmen (11), der zur Ankopplung des Vorsatzgeräts (10) an die landwirtschaftliche Erntemaschine eingerichtet ist, mit einer Erntegutfördereinrichtung (12), die am Hauptrahmen (11) über Träger (15) derart befestigt ist, dass die Erntegutfördereinrichtung (12) an den Trägern (15) drehbar gelagert ist und zusammen mit den Trägern (15) gegenüber dem Hauptrahmen (11) schwenkbar ist, wobei die Erntegutfördereinrichtung (12) in Zusammenwirkung mit einem Bodenblech (14) zur Förderung des Ernteguts eingerichtet ist. Direkt oder indirekt am Hauptrahmen (11) und an mindestens einem Träger (15) oder einem mit den Trägern (15) verbundenen Hilfsrahmen (19) greift mindestens ein Hydraulikzylinder (18) an, der eingerichtet ist, die Erntegutfördereinrichtung (12) in Richtung auf das Bodenblech zu drücken oder zu ziehen. Der jeweilige Hydraulikzylinder (18) weist einen Zylinder (20), einen im Zylinder (20) verlagerbaren ersten Kolben (21) und einen ebenfalls im Zylinder (20) verlagerbaren weiteren Kolben (35) auf, der eingerichtet ist, die Bewegung des ersten Kolbens (21) und so die Bewegung der Erntegutfördereinrichtung (12) in Richtung auf das Bodenblech (14) zu begrenzen.

## Beschreibung

Die Erfindung betrifft ein Vorsatzgerät für eine landwirtschaftliche Erntemaschine und eine landwirtschaftliche Erntemaschine mit einem Vorsatzgerät.

DE 10 2012 011 574 B4 offenbart ein als Aufnahmevorrichtung ausgebildetes Vorsatzgerät für eine landwirtschaftliche Erntemaschine. Die Aufnahmevorrichtung weist einen Hauptrahmen auf, der zur Ankopplung der Aufnahmevorrichtung an die landwirtschaftliche Erntemaschine ausgebildet ist. Ferner weist die Aufnahmevorrichtung eine Erntegutaufnahmeeinrichtung und eine Erntegutfördereinrichtung auf. Die Erntegutaufnahmeeinrichtung ist am Hauptrahmen befestigt und zur Erntegutaufnahme von einem Untergrund eingerichtet. Die Erntegutfördereinrichtung ist am Hauptrahmen über Träger schwenkbar befestigt, wobei die Erntegutfördereinrichtung in Zusammenwirkung mit einem Bodenblech zur Förderung des durch die Erntegutaufnahmeeinrichtung aufgenommenen Ernteguts eingerichtet ist.

DE 198 47 891 A1 offenbart ein weiteres als Aufnahmevorrichtung ausgebildetes Vorsatzgerät für eine landwirtschaftliche Erntemaschine mit einer Erntegutaufnahmeeinrichtung und einer Erntegutfördereinrichtung.

Es ist aus der Praxis bekannt, die Erntegutfördereinrichtung einer solchen Aufnahmevorrichtung über mindestens einen einfachwirkenden Hydraulikzylinder entgegen der Federkraft mindestens eines Federelements auszuheben bzw. anzuheben, also vom Bodenblech wegzubewegen. Das mindestens eine Federelement zieht oder drückt die Erntegutfördereinrichtung unter einer Vorspannung zwischen Erntegutfördereinrichtung und Bodenblech in Richtung auf das Bodenblech. Die Federkraft des mindestens einen Federelements wirkt dem Anheben bzw.

Ausheben der Erntegutfördereinrichtung entgegen, wodurch die zulässige Federkraft des Federelements und damit Vorspannung zwischen Erntegutfördereinrichtung und Bodenblech begrenzt ist.

Hiervon ausgehend liegt der vorliegenden Erfindung die Aufgabe zugrunde, ein neuartiges Vorsatzgerät für eine landwirtschaftliche Erntemaschine und eine landwirtschaftliche Erntemaschine mit einem solchen Vorsatzgerät zu schaffen.

Diese Aufgabe wird durch ein Vorsatzgerät nach Anspruch 1 und eine landwirtschaftliche Erntemaschine nach Anspruch 11 gelöst.

Erfindungsgemäß greift direkt oder indirekt am Hauptrahmen und an mindestens einem Träger oder einem mit den Trägern verbundenen Hilfsrahmen mindestens ein Hydraulikzylinder an, der eingerichtet ist, die Erntegutfördereinrichtung in Richtung auf das Bodenblech zu drücken oder zu ziehen.

Der jeweilige Hydraulikzylinder weist einen Zylinder, einen im Zylinder verlagerbaren ersten Kolben und einen ebenfalls im Zylinder verlagerbaren weiteren Kolben auf, der eingerichtet ist, die Bewegung des ersten Kolbens und so die Bewegung der Erntegutfördereinrichtung in Richtung auf das Bodenblech zu begrenzen.

Über den im Zylinder verlagerbaren weiteren Kolben kann die Bewegung des ersten Kolbens und damit die Bewegung der Erntegutförderreinrichtung in Richtung auf das Bodenblech begrenzt werden. Die Erfindung gewährleistet dies bei einfacher Bauform.

Vorzugsweise ist der jeweilige Hydraulikzylinder ein doppeltwirkender Hydraulikzylinder, der eingerichtet ist, um einerseits die Erntegutfördereinrichtung in Richtung auf das Bodenblech zu drücken oder zu ziehen, und um anderseits die Erntegutfördereinrichtung vom Bodenblech wegzubewegen. Diese Ausführung ist besonders bevorzugt, um den jeweiligen Hydraulikzylinder nicht nur dazu zu nutzen, die Erntegutförderreinrichtung in Richtung auf das Bodenblech zu bewegen, sondern auch die Erntegutförderreinrichtung vom Bodenblech wegzubewegen und so im Bedarfsfall die Erntegutförderreinrichtung anzuheben bzw. auszuheben. Doppeltwirkende Hydraulikzylinder ermöglichen dies bei einfacher Bauform des Vorsatzgeräts.

Vorzugsweise ist zu beiden Seiten des jeweiligen ersten Kolbens jeweils eine Hydraulikkammer ausgebildet, wobei dann, wenn eine erste Hydraulikkammer mit Hydrauliköl befüllt wird, die Erntegutfördereinrichtung in Richtung auf das Bodenblech gedrückt oder gezogen wird, und wobei dann, wenn eine zweite Hydraulickammer des jeweiligen ersten Kolbens mit Hydrauliköl befüllt wird, die Erntegutfördereinrichtung vom Bodenblech wegbewegt wird. Der weitere Kolben begrenzt die zweite Hydraulikkammer und eine dritte Hydraulikkammer, wobei ein in der dritten Hydraulikkammer herrschender Hydraulikdruck die Position des weiteren Kolbens und so das Volumen der ersten Hydraulikkammer bestimmt. Hiermit ist es auf besonders einfache Art und Weise möglich, die Bewegung der Erntegutförderreinrichtung in Richtung auf das Bodenblech flexibel und damit einstellbar zu begrenzen.

Vorzugsweise ist das Vorsatzgerät als Aufnahmevorrichtung ausgebildet, die ferner eine Erntegutaufnahmeeinrichtung aufweist, die direkt oder indirekt am Hauptrahmen befestigt ist, wobei die Erntegutaufnahmeeinrichtung zur Erntegutaufnahme von einem Untergrund eingerichtet ist, und wobei die Erntegutfördereinrichtung zur Förderung des durch die Erntegutaufnahmeeinrichtung aufgenommenen Ernteguts eingerichtet ist. Die Erfindung kommt vorzugsweise bei Aufnahmevorrichtungen zum Einsatz, die neben der Erntegutfördereinrichtung auch eine Erntegutaufnahmeeinrichtung aufweisen.

In einer weiteren bevorzugten Ausführungsform ist das Vorsatzgerät als Schneidwerk ausgebildet, das ferner eine Mäheinrichtung aufweist, die am Hauptrahmen befestigt ist und dazu eingerichtet ist, Erntegut von einem Feldboden abzutrennen oder abzuschneiden sowie das abgetrennte bzw. abgeschnittene Erntegut an die Erntegutfördereinrichtung zu übergeben, welche dazu eingerichtet ist, das Erntegut quer zu einer Ernterichtung zu fördern.

Die landwirtschaftliche Erntemaschine ist vorzugsweise als selbstfahrender Feldhäcksler ausgeführt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. Dabei zeigt:
- Fig. 1: eine Seitenansicht eines Details eines als Aufnahmevorrichtung ausgebildeten Vorsatzgeräts für eine landwirtschaftliche Erntemaschine,
- Fig. 2: das Detail der Fig. 1 in einem anderen Zustand;
- Fig. 3: einen Ausschnitt aus einem Hydraulikplan des Vorsatzgeräts der Fig. 1 und 2 in einem ersten Zustand des Hydraulikzylinders,
- Fig. 4: den Hydraulikplan der Fig. 1 und 2 in einem zweiten Zustand des Hydraulikzylinders,

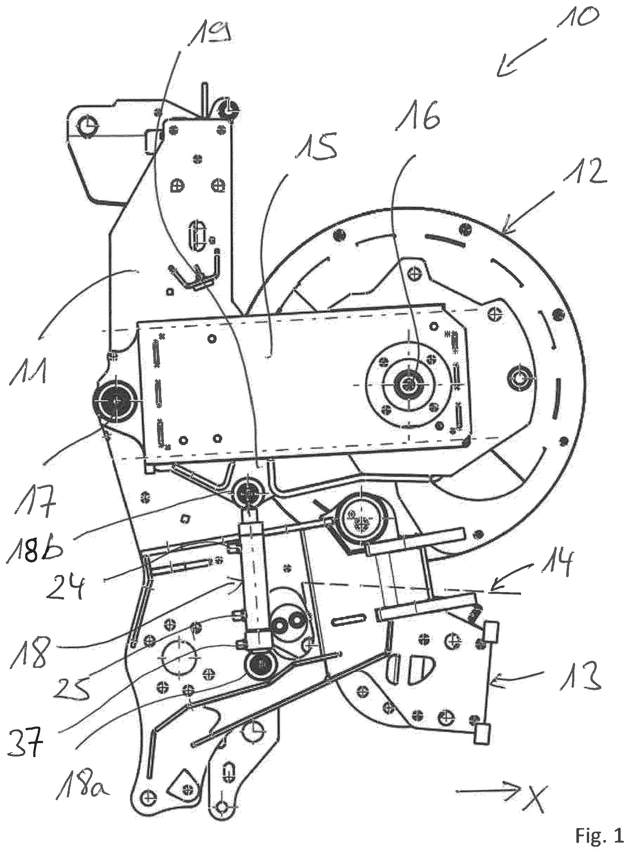

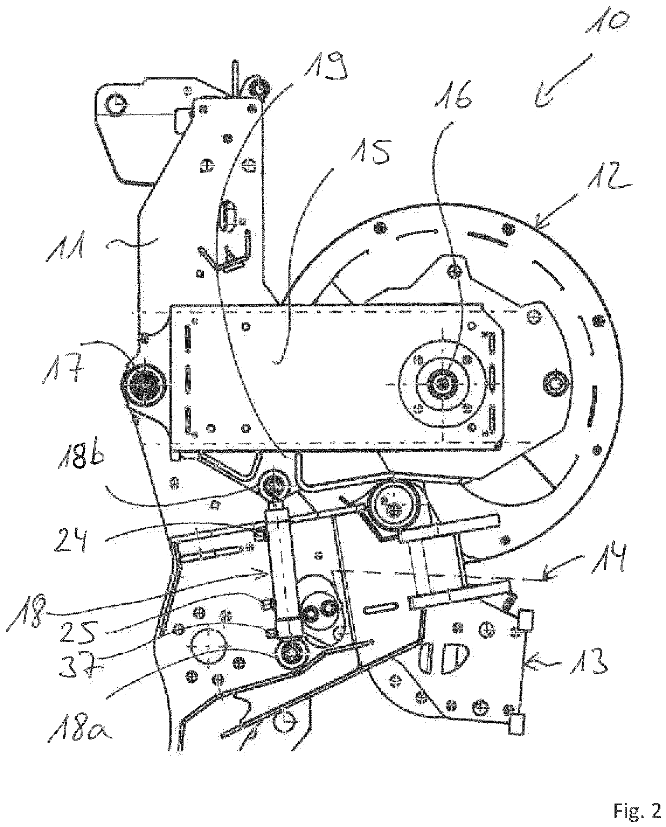

Fig. 1 und 2 zeigen jeweils eine Seitenansicht eines als Aufnahmevorrichtung für Erntegut ausgebildeten Vorsatzgeräts 10 für eine landwirtschaftliche Erntemaschine.

Das Vorsatzgerät 10 weist einen Hauptrahmen 11 auf, der eingerichtet ist, das Vorsatzgerät 10 an eine landwirtschaftliche Erntemaschine, insbesondere an einen selbstfahrenden Feldhäcksler, anzukoppeln. Das Vorsatzgerät 10 weist eine in Fig. 1 nicht gezeigte Erntegutaufnahmeeinrichtung und eine in Fig. 1 gezeigte Erntegutfördereinrichtung 12 auf. Die in Fig. 1 nicht gezeigte Erntegutaufnahmeeinrichtung ist unterhalb der Erntegutfördereinrichtung 12 an einem Montageflansch 13 des Hauptrahmens 11 montiert.

Die Erntegutaufnahmeeinrichtung ist zur Aufnahme von Erntegut von einem Untergrund eingerichtet. Das Erntegut liegt dabei vorzugsweise in Form eines sogenannten Schwads auf dem Untergrund, der in einem vorhergehenden Arbeitsschritt während des Mähens des Ernteguts oder nach dem Mähen gebildet wurde. Die der Förderung des durch die nicht gezeigte Erntegutaufnahmeeinrichtung aufgenommenen Ernteguts dienende Erntegutfördereinrichtung 12 wirkt mit einem Bodenblech 14 zusammen. Das Bodenblech 14 ist an der nicht gezeigten Erntegutaufnahmeeinrichtung angeordnet und bildet einen Förderboden für die Erntegutfördereinrichtung 12.

Zum Transport des Ernteguts ist die Erntegutfördereinrichtung 12 in Richtung auf das Bodenblech 14 gedrückt bzw. gezogen. Fig. 1 und 2 unterscheiden sich dabei durch den Abstand zwischen der Erntegutfördereinrichtung 12 und dem Bodenblech 14. In Fig. 1 ist der Abstand zwischen der Erntegutfördereinrichtung 12 und dem Bodenblech 14 im Vergleich zu Fig. 2 vergrößert.

Die Erntegutfördereinrichtung 12 ist an Trägern 15 drehbar gelagert und über die Träger 15 am Hauptrahmen 11 schwenkbar befestigt. Fig. 1 und 2 zeigen eine Drehachse 16, um welche die Erntegutfördereinrichtung 12 drehbar an den Trägern 15 gelagert ist. Zu beiden seitlichen Enden der Erntegutfördereinrichtung 12 ist jeweils ein derartiger Träger 15 angeordnet.

Ferner zeigen Fig. 1 und 2 eine Schwenkachse 17, um welche die Träger 15 und über die Träger 15 die Erntegutfördereinrichtung 12 relativ zum Hauptrahmen 11 schwenkbar sind bzw. ist, insbesondere um den Abstand zwischen der Erntegutfördereinrichtung 12 und dem Bodenblech 14 einzustellen.

Wie bereits ausgeführt, ist in einem Übergabebereich zwischen der in Fig. 1 und 2 nicht gezeigten Erntegutaufnahmeeinrichtung und der in Fig. 1, 2 gezeigten Erntegutfördereinrichtung 12 das Bodenblech 14 angeordnet. Das Bodenblech 14 ist dabei unterhalb der Erntegutfördereinrichtung 12 positioniert.

Die Erntegutfördereinrichtung 12, die insbesondere als Querförderschnecke ausgebildet ist, fördert das Erntegut im Zusammenwirken mit dem Bodenblech 14 zu einem Mittenbereich des Vorsatzgeräts 10, wo es an die Erntemaschine weitergegeben wird.

Im Betrieb wird das Vorsatzgerät 10 von der landwirtschaftlichen Erntemaschine in der Fortbewegungsrichtung X bewegt, wobei in dieser Fortbewegungsrichtung X gesehen das Bodenblech 14 hinter der nicht gezeigten Erntegutaufnahmeeinrichtung angeordnet ist.

Um nun die Erntegutfördereinrichtung 12 in Richtung auf das Bodenblech zu ziehen oder zu drücken, weist das Vorsatzgerät 10 mindestens einen Hydraulikzylinder 18 auf, der mit einem ersten Ende 18a gelenkig direkt oder indirekt am Hauptrahmen 11 und mit einem gegenüberliegenden zweiten Ende 18b gelenkig an einem Träger 15 oder an einem mit dem Träger 15 insbesondere fest verbundenen Hilfsrahmen 19 befestigt ist.

Vorzugsweise ist zu beiden Seiten der Erntegutfördereinrichtung 12 jeweils ein derartiger Hydraulikzylinder 18 vorhanden, der einerseits direkt oder indirekt am Hauptrahmen 11 und andererseits an jeweils einem der Träger 15 bzw. am Hilfsrahmen 19 zu beiden Seiten der Erntegutfördereinrichtung 12 gelenkig angreift bzw. gelenkig montiert ist.

Im gezeigten Ausführungsbeispiel ist der jeweilige Hydraulikzylinder 18 als doppeltwirkender Hydraulikzylinder ausgeführt. Derselbe ist dazu eingerichtet, um einerseits die Erntegutförderreinrichtung 12 in Richtung auf das Bodenblech 14 zu drücken oder zu ziehen und um andererseits die Erntegutförderreinrichtung 12 vom Bodenblech 14 wegzubewegen, und zwar um die Erntegutförderreinrichtung 12 anzuheben bzw. auszuheben.

Über den mindestens einen doppeltwirkenden Hydraulikzylinder 18 kann demnach der Abstand zwischen der Erntegutfördereinrichtung 12 und dem Bodenblech 14 verändert werden. So kann über den mindestens einen doppeltwirkenden Hydraulikzylinder 18 einerseits die Erntegutfördereinrichtung 12 gedrückt oder gezogen werden, andererseits kann die Erntegutfördereinrichtung 12 vom Bodenblech 14 wegbewegt und damit abgehoben bzw. ausgehoben werden, um den Abstand zum Bodenblech 14 zu vergrößern.

In einer angehobenen Position können aufgetretene Verstopfungen des geförderten Ernteguts oder eingezogene Fremdkörper besonders vorteilhaft einfach beseitigt werden.

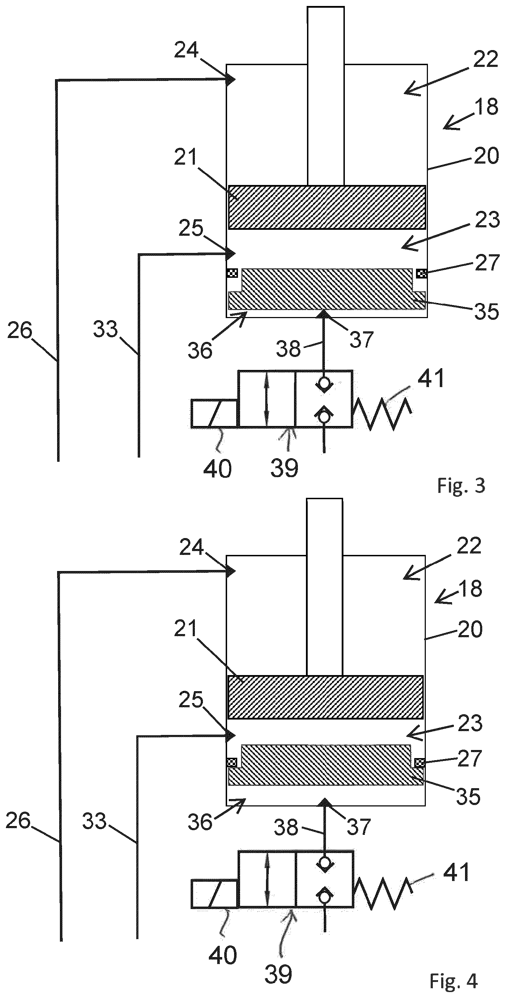

Fig. 3, 4 zeigt einen Ausschnitt aus einem Hydraulikplan des Vorsatzgeräts 10 mit einem vorzugsweise als doppeltwirkender Hydraulikzylinder 18 ausgebildeten Hydraulikzylinder 18.

Der Hydraulikzylinder 18 weist einen Zylinder 20 und einen im Zylinder 20 verlagerbaren ersten Kolben 21 auf. Zu beiden Seiten des Kolbens 21 ist jeweils eine Hydraulikkammer 22, 23 ausgebildet, wobei mit jeder der Hydraulikkammern 22, 23 jeweils ein Hydraulikanschluss 24, 25 des Hydraulikzylinders 18 zusammenwirkt.

Dann, wenn eine erste Hydraulikkammer 22 über den Hydraulikanschluss 24 und eine erste Hydraulikleitung 26 mit Hydrauliköl befüllt wird und aus einer zweiten Hydraulikkammer 23 über den Hydraulikanschluss 25 und eine zweite Hydraulikleitung 33 Hydrauliköl abgeführt wird, wird die Erntegutfördereinrichtung 12 in Richtung auf das Bodenblech 14 gedrückt oder gezogen.

Dann, wenn die zweite Hydraulikkammer 23 über den Hydraulikanschluss 25 und die zweite Hydraulikleitung 33 mit Hydrauliköl befüllt wird und aus der ersten Hydraulikkammer 22 über den Hydraulikanschluss 24 und die erste Hydraulikleitung 26 Hydrauliköl abgeführt wird, wird die Erntegutfördereinrichtung 12 vom Bodenblech 14 wegbewegt.

Der im gezeigten Ausführungsbeispiel als doppeltwirkender Hydraulikzylinder ausgebildete Hydraulikzylinder 18 weist zusätzlich zu dem Zylinder 20 und dem im Zylinder 20 verlagerbaren ersten Kolben 21 einen ebenfalls im Zylinder 20 verlagerbaren weiteren Kolben 35 auf.

Dieser verlagerbare weitere Kolben 35 kann zwischen der in Fig. 3 gezeigten ersten, abgesenkten, Stellung und der in Fig. 4 gezeigten zweiten, angehobenen, Stellung überführt werden. Über diesen weiteren Kolben 35 wird die Bewegung des ersten Kolbens 21 und damit die Bewegung der Erntegutförderreinrichtung 12 in Richtung auf das Bodenblech 14 begrenzt.

Gemäß Fig. 3, 4 begrenzt der im Zylinder 20 verlagerbare weitere Kolben 35 einerseits die zweite Hydraulikkammer 23 und andererseits eine dritte Hydraulickammer 36, die über einen dritten Hydraulikanschluss 37 und eine dritte Hydraulikleitung 38 an eine wiederum nicht gezeigte Hydraulikpumpe angeschlossen ist.

In diese dritte Hydraulikleitung 38 ist ein schaltbares Ventil 39 eingebunden, welches in der in Fig. 3, 4 gezeigten Schaltstellung sperrend wirkt und den dritten Hydraulikanschluss 37 und damit die dritte Hydraulikkammer 36 von der jeweiligen Hydraulikpumpe trennt. Aus der in Fig. 3, 4 gezeigten Sperrstellung des Ventils 39 ist dasselbe über einen Aktuator 40 entgegen der Federkraft eines Federelements 41 in eine Durchlassstellung verlagerbar, um die dritte Hydraulikkammer 36 an die jeweilige Hydraulikpumpe anzukoppeln.

In dem in Fig. 3 gezeigten Zustand des weiteren Kolbens 35 ist derselbe im Vergleich zum Zustand der Fig. 4 weiter in den Zylinder 20 in Richtung auf einen Boden desselben eingefahren, sodass der erste Kolben 21 in Fig. 3 im Vergleich zur Fig. 4 weiter in den Zylinder 20 eingefahren werden kann, um so letztendlich die Erntegutförderreinrichtung 12 weiter in Richtung auf das Bodenblech 14 zu bewegen.

In Fig. 4 ist die Stellung des weiteren Kolbens 35 im Vergleich zur Fig. 3 weiter in Richtung auf einen dem Boden gegenüberliegenden Deckel des Zylinders 20 verlagert, wodurch der erste Kolben 21 im Vergleich zur Fig. 3 weniger weit in den Zylinder 20 eingefahren werden kann, wodurch dann im Vergleich zur Fig. 3 ein größerer Abstand zwischen der Erntegutförderreinrichtung 12 und dem Bodenblech 14 eingestellt wird.

Durch den im Zylinder 20 des Hydraulikzylinders 18 verlagerbaren weiteren Kolben 35 kann dann, wenn die Erntegutförderreinrichtung 12 über den jeweiligen Hydraulikzylinder 18 in Richtung auf das Bodenblech 14 gezogen oder gedrückt ist bzw. wird, der Abstand zwischen dem Bodenblech 14 und der Erntegutförderreinrichtung 12 eingestellt werden.

Die Bewegung des weiteren Kolbens 35 innerhalb des Zylinders 20 wird durch einen Anschlag 27 zwischen den in Fig. 3 und 4 gezeigten Stellungen des weiteren Kolbens 35 begrenzt. Der Anschlag 27 für den weiteren Kolben 35 ist ortsfest an einer Innenwand des Zylinders 20 montiert bzw. befestigt. Der Anschlag 27 für den weiteren Kolben 35 greift in eine Aussparung im weiteren Kolben 35 ein und begrenzt die Verlagerbarkeit desselben innerhalb des Zylinders 20.

Statt eines Anschlags 27 können auch andere Mittel zur Begrenzung des Weges des weiteren Kolbens 35 vorgesehen werden. Diese müssen so gestaltet sein, dass sie einerseits den Weg des weiteren Kolbens 35 begrenzen, aber gleichzeitig die Bewegung des ersten Kolbens 21 nicht behindern, insbesondere wenn dessen kompletter Hubweg vom weiteren Kolben 35 freigegeben ist.

Nimmt der weitere Kolben 35 die in Fig. 4 gezeigte Position ein, in welcher der weitere Kolben 35 das Einfahren des ersten Kolbens 21 in den Zylinder 20 weiter begrenzt als in Fig. 3, so ist innerhalb der dritten Hydraulikkammer 36 ein Hydraulikdruck eingestellt, der verhindert, dass infolge des Einfahrens des ersten Kolbens 21 in den Zylinder 20 und des hierdurch bewirkten Drucks in der zweiten Hydraulikkammer 23 der weitere Kolben 35 aus der in Fig. 4 gezeigten Position heraus in Richtung auf die in Fig. 3 gezeigte Position gedrückt wird.

Zur Überwachung des Drucks in der dritten Hydraulikkammer 36 kann ein Drucksensor vorgesehen werden, der vorzugsweise in der Hydraulikleitung 38 angeordnet ist. Der Drucksensor ist vorzugsweise signaltechnisch mit einem Steuergerät verbunden und das Steuergerät ist dazu eingerichtet, bei Abfall des Druckes unter einen vorgegebenen Wert, das Ventil 39 so anzusteuern, dass der Druck auf einen erforderlichen Wert ansteigt.

Mit der Erfindung kann der minimale Abstand zwischen der Erntegutförderreinrichtung 12 und dem Bodenblech 14 dann, wenn der jeweilige Hydraulikzylinder 18 die Erntegutförderreinrichtung 12 in Richtung auf das Bodenblech 14 zieht oder drückt, eingestellt werden.

Ist ein größerer Abstand zwischen der Erntegutförderreinrichtung 12 und dem Bodenblech 14 gewünscht, so nimmt der weitere Kolben 35 des Hydraulikzylinders 18 die in Fig. 4 gezeigte Position ein. Ist hingegen ein kleinerer Abstand zwischen der Erntegutförderreinrichtung 12 und dem Bodenblech 14 gewünscht, so nimmt der weitere Kolben 35 die in Fig. 3 gezeigte Stellung ein.

Wird das Vorsatzgerät 10 mit Hydraulikzylindern 18 betrieben, in welchen die jeweiligen weiteren Kolben 35 die in Fig. 4 gezeigte Position einnehmen, in welcher also ein relativ großer Abstand zwischen der Erntegutförderreinrichtung 12 und dem Bodenblech 14 zum Transport des aufgenommenen Ernteguts gewünscht ist, und wird das Vorsatzgerät 10 bzw. die das Vorsatzgerät tragende landwirtschaftliche Erntemaschine in einer Vorgewendestellung betrieben, so kann der weitere Kolben 35 von dem in Fig. 4 gezeigten Zustand automatisch in den in Fig. 3 gezeigten Zustand überführt werden, um im Vorgewende den Abstand zwischen der Erntegutförderreinrichtung 12 und dem Bodenblech 14 zu verkleinern, so dass das Bodenblech 14 vom Erntegut freigeräumt wird.

Die Überführung des weiteren Kolbens 35 zwischen den in Fig. 3 und 4 gezeigten Positionen, die der Einstellung eines unterschiedlichen Abstands zwischen Erntegutförderreinrichtung 12 und dem Bodenblech 14 dienen, kann automatisch über ein Steuergerät erfolgen, es ist auch möglich, dass diese Überführung durch einen Fahrer der landwirtschaftlichen Erntemaschine durch Betätigung eines Tasters oder Schalters in der Kabine der landwirtschaftlichen Erntemaschine ausgelöst wird.

Zur Erkennung, ob sich das Vorsatzgerät 10 in einer angehobenen Vorgewendeposition befindet, kann das Steuergerät Signale von der Erntemaschine, insbesondere von einem selbstfahrenden Feldhäcksler, empfangen. Die Signale zeigen dem Steuergerät an, ob sich das Vorsatzgerät 10 in einer angehobenen Vorgewendeposition oder in einer Betriebsposition befindet. Das Steuergerät kann die Signale verarbeiten und entsprechende Steuersignale für das Ventil 39 generieren.

Eine weitere Automatikfunktion kann die Stellung des weiteren Kolbens 35 anhand weiterer Parameter, wie beispielsweise abhängig von der Durchsatzmenge des Ernteguts durch das Vorsatzgerät 10 einstellen, welche zum Beispiel über Drucksensoren oder auch über eine Kamera erfasst werden kann.

Weiterhin kann die Schneckenhöhe der Erntegutfördereinrichtung 12 auch alternativ oder zusätzlich abhängig von einer Antriebskraft, die für den Antrieb des Vorsatzgeräts 10 benötigt wird, oder abhängig von einer Erntegutpolsterhöhe, welche der Erntemaschine, insbesondere einem Feldhäcksler, zugeführt wird, gesteuert werden. Dazu kann das Steuergerät auch Signale bezüglich eines Hydraulikdrucks in einer Hydraulikleitung zu einem hydraulischen Antrieb des Vorsatzgerätes 10 oder Signale einer Erntemaschine zur Erntegutpolterhöhe verarbeiten.

Durch die Automatikfunktionen kann die Auslastung des selbstfahrenden Feldhäckslers deutlich gesteigert werden.

### Bezugszeichenliste

- 10: Vorsatzgerät
- 11: Hauptrahmen
- 12: Erntegutfördereinrichtung
- 13: Montageflansch
- 14: Bodenblech
- 15: Träger
- 16: Drehachse
- 17: Schwenkachse
- 18: Hydraulikzylinder
- 18a: Ende
- 18b: Ende
- 19: Hilfsrahmen
- 20: Zylinder
- 21: Kolben
- 22: Hydraulikkammer
- 23: Hydraulikkammer
- 24: Hydraulikanschluss
- 25: Hydraulikanschluss
- 26: Hydraulikleitung
- 27: Anschlag

- 33: Hydraulikleitung

- 35: Kolben
- 36: Hydraulikkammer
- 37: Hydraulikanschluss
- 38: Hydraulikleitung
- 39: Ventil
- 40: Aktuator
- 41: Federelement

## Patentansprüche

1. Vorsatzgerät (10) für eine landwirtschaftliche Erntemaschine,
mit einem Hauptrahmen (11), der zur Ankopplung des Vorsatzgeräts (10) an die landwirtschaftliche Erntemaschine eingerichtet ist,
mit einer Erntegutfördereinrichtung (12), die am Hauptrahmen (11) über Träger (15) derart befestigt ist, dass die Erntegutfördereinrichtung (12) an den Trägern (15) drehbar gelagert ist und zusammen mit den Trägern (15) gegenüber dem Hauptrahmen (11) schwenkbar ist, wobei die Erntegutfördereinrichtung (12) in Zusammenwirkung mit einem Bodenblech (14) zur Förderung des Ernteguts eingerichtet ist,
**dadurch gekennzeichnet, dass**
direkt oder indirekt am Hauptrahmen (11) und an mindestens einem Träger (15) oder einem mit den Trägern (15) verbundenen Hilfsrahmen (19) mindestens ein Hydraulikzylinder (18) angreift,
der eingerichtet ist, die Erntegutfördereinrichtung (12) in Richtung auf das Bodenblech (14) zu drücken oder zu ziehen,
der jeweilige Hydraulikzylinder (18) einen Zylinder (20), einen im Zylinder (20) verlagerbaren ersten Kolben (21) und einen ebenfalls im Zylinder (20) verlagerbaren weiteren Kolben (35) aufweist,
der eingerichtet ist, die Bewegung des ersten Kolbens (21) und so die Bewegung der Erntegutfördereinrichtung (12) in Richtung auf das Bodenblech (14) zu begrenzen.

2. Vorsatzgerät (10) nach Anspruch 1, **dadurch gekennzeichnet, dass**
der jeweilige Hydraulikzylinder (18) ein doppeltwirkender Hydraulikzylinder (18) ist,
der jeweilige doppeltwirkende Hydraulikzylinder (18) eingerichtet ist, um einerseits die Erntegutfördereinrichtung (12) in Richtung auf das Bodenblech (14) zu drücken oder zu ziehen, und um anderseits die Erntegutfördereinrichtung (12) vom Bodenblech (14) wegzubewegen oder anzuheben.

3. Vorsatzgerät (10) nach einem der Ansprüche 1 oder 2, **dadurch gekennzeichnet, dass**
zu beiden Seiten des jeweiligen ersten Kolbens (21) jeweils eine Hydraulikkammer (22, 23) ausgebildet ist,
dann, wenn eine erste Hydraulikkammer (22) des jeweiligen ersten Kolbens (21) mit Hydrauliköl befüllt wird, die Erntegutfördereinrichtung (12) in Richtung auf das Bodenblech (14) gedrückt oder gezogen wird,
der weitere Kolben (35) eine zweite Hydraulikkammer (23) des jeweiligen Kolbens (21) begrenzt.

4. Vorsatzgerät (10) nach Anspruch 3, **dadurch gekennzeichnet, dass**
dann, wenn die zweite Hydraulikkammer (23) des jeweiligen ersten Kolbens (21) mit Hydrauliköl befüllt wird, die Erntegutfördereinrichtung (12) vom Bodenblech (14) wegbewegt wird.

5. Vorsatzgerät (10) nach Anspruch 3 oder 4, **dadurch gekennzeichnet, dass**
der weitere Kolben (35) die zweite Hydraulikkammer (23) und eine dritte Hydraulikkammer (36) begrenzt,
ein in der dritten Hydraulikkammer (36) herrschender Hydraulikdruck die Position des weiteren Kolbens (35) im Zylinder (20) bestimmt.

6. Vorsatzgerät (10) nach Anspruch 5, **dadurch gekennzeichnet, dass**
die dritte Hydraulikkammer (36) über eine dritte Hydraulikleitung (38) mit einer Hydraulikpumpe gekoppelt ist, wobei in der drittem Hydraulikleitung (38) ein schaltbareres Ventil (39) angeordnet ist, welches in einer ersten Stellung die Hydraulikpumpe mit der dritten Hydraulikkammer (36) verbindet und welches in einer zweiten Stellung die Hydraulikpumpe von der dritten Hydraulikkammer (36) trennt.

7. Vorsatzgerät (10) nach einem der Ansprüche 1 bis 6, **dadurch gekennzeichnet, dass**
dasselbe eine Aufnahmevorrichtung ist, die eine Erntegutaufnahmeeinrichtung aufweist, die direkt oder indirekt am Hauptrahmen (11) befestigt ist, wobei die Erntegutaufnahmeeinrichtung zur Erntegutaufnahme von einem Untergrund und wobei die Erntegutfördereinrichtung (12) zur Förderung des durch die Erntegutaufnahmeeinrichtung aufgenommenen Ernteguts eingerichtet ist.

8. Vorsatzgerät (10) nach einem der Ansprüche 1 bis 6, **dadurch gekennzeichnet, dass** das Vorsatzgerät (10) als Schneidwerk ausgebildet, das ferner eine Mäheinrichtung aufweist, die am Hauptrahmen (11) befestigt ist und dazu eingerichtet ist, Erntegut von einem Feldboden abzutrennen oder abzuschneiden sowie das abgetrennte bzw. abgeschnittene Erntegut an die Erntegutfördereinrichtung (12) zu übergeben, welche dazu eingerichtet ist, das Erntegut quer zu einer Ernterichtung zu fördern.

9. Vorsatzgerät (10) nach einem der vorangehenden Ansprüche, **dadurch gekennzeichnet, dass** zu beiden Seiten der Erntegutfördereinrichtung (12) direkt oder indirekt am Hauptrahmen (11) und an dem jeweiligen Träger (15) oder an dem Hilfsrahmen (19) jeweils ein Hydraulikzylinder (18) angreift.

10. Landwirtschaftliche Erntemaschine, insbesondere selbstfahrender Feldhäcksler, mit einem Vorsatzgerät (10) nach einem der Ansprüche 1 bis 9.
